Europäisches Patentamt

European Patent Office

Office européen des brevets

(19)

(11) Veröffentlichungsnummer: **0 176 500**
**B1**

(12) **EUROPÄISCHE PATENTSCHRIFT**

(45) Veröffentlichungstag der Patentschrift: **08.08.90**

(51) Int. Cl.⁵: **H 01 M 2/16, C 25 B 13/04**

(21) Anmeldenummer: **85890237.2**

(22) Anmeldetag: **26.09.85**

(54) **Material und Verfahren zur Bildung flüssigkeitsdurchlässiger Schichten.**

(30) Priorität: **26.09.84 AT 3048/84**

(43) Veröffentlichungstag der Anmeldung:
**02.04.86 Patentblatt 86/14**

(45) Bekanntmachung des Hinweises auf die
Patenterteilung:
**08.08.90 Patentblatt 90/32**

(84) Benannte Vertragsstaaten:
**AT BE CH DE FR GB IT LI LU NL SE**

(56) Entgegenhaltungen:
**EP-A-0 040 758    FR-A- 886 226**
**DE-A-1 125 152    US-A-3 438 912**
**DE-A-2 127 654    US-A-3 551 210**

**The Merck Index, MERCK & Co (1983), Rahway
USA, Seite 1096**

**Die Akte enthält technische Angaben, die nach
dem Eingang der Anmeldung eingereicht
wurden und die nicht in dieser Patentschrift
enthalten sind.**

(73) Patentinhaber: **Akkumulatorenfabrik Dr.
Leopold Jungfer
A-9181 Feistritz im Rosental (AT)**

(72) Erfinder: **Rappold, Helmuth
Hauptstrasse 160
A-1140 Wien Hadersdorf (AT)**

(74) Vertreter: **Pfeifer, Otto, Dipl.-Ing. et al
Patentanwälte Dipl.-Ing. Dr. techn. Schütz,
Alfred Dr. phil. Mrazek, Engelbert Dipl.-Ing.
Holzer, Walter Dipl.-Ing. Pfeifer, Otto
Fleischmanngasse 9
A-1040 Wien (AT)**

# Beschreibung

Die Erfindung betrifft ein Verfahren zur Herstellung eines für flüssigkeitsdurchlässige Trennschichten geeigneten Kunststoff-Sintermaterials aus mindestens einem Kunststoff, ausgewählt aus der Gruppe enthaltend Polyvinylchlorid, Polyvinylchloridcopolymere, wie PVC/ABS oder PVC/Acrylsäureester, Polyvinylchloridpfropfpolymere sowie perchlorierte Polyvinylchloridabkömmlinge, Polyolefine, Polystyrol und Mischungen aus diesen Komponenten, bei dem die Kunststoffteilchen durch Sintern unter Porenausbildung zwischen den Kunststoffteilchen miteinander verbunden werden. Derartige flüssigkeitsdurchlässige Trennschichten kommen insbesondere bei elektrochemischen Prozessen, besonders bevorzugt zur Bildung von Separatoren für Blei-Akkumulatoren, zur Anwendung.

Die Anwendung von Trennschichten, die einerseits z.B. Phasen verschiedener Zusammensetzung voneinander trennen sollen oder auch als Trennmittel zum vorzugsweise spezifischen Zurückhalten bestimmter Phasenbestandteile oder zum Auftrennen von Phasen in ihre Bestandteile durch ein besonderes Adsorptions/Desorptionsverhalten dienen, ist in der Technik vielfach verbreitet. Die Trennschichten liegen dabei als besondere Formkörper oder Bauteile, z.B. als Diaphragmen oder Separatoren, oder als im wesentlichen ungeformte Schichten, z.B. Säulenfüllungen, vor, die aus Pulvern oder Perlen aufgebaut sind. Im Zusammenhang mit Separatoren für Bleiakkumulatoren, d.h. zwischen den Elektrodenplatten angeordneten Trennplatten, ist es auch bereits bekannt geworden, diese Formkörper aus PVC-Pulver durch Sintern in Bandform herzustellen, z.B. nach den AT—B—309 795 und 321 567.

In DE—A—21 27 654 werden Formmassen auf der Grundlage von Polyvinylchlorid und ihre Verwendung zur Herstellung von Separatoren für Batterien beschrieben. Dabei werden Formmassen aus einem Gemisch aus im Suspensionsverfahren hergestelltem Polyvinylchloridpulver und aus im Emulsionsverfahren hergestelltem Polyvinylchloridpulver sowie aus einem nichtionischen Antistatikmittel gesintert.

Es wurde nunmehr gefunden, daß man die Eigenschaften derartiger Trennschichten weitgehend verbessern kann, wenn man zu deren Aufbau ein mikroporöses Kunststoffmaterial in Pulverform einsetzt, das gegebenenfalls gesintert sein kann und dessen Partikel jeweils mindestens teilweise durchgehende Poren aufweisen.

Gegenstand der Erfindung ist somit ein Verfahren der eingangs erwähnten Gattung, das sich dadurch auszeichnet, daß Kunststoffpulver, die keine Mikroporosität besitzen müssen und eine niedrigere Sintertemperatur aufweisen, als Binderphase zusammen mit mikroporösen Kunststoffpulvern höherer Sintertemperatur unter Einhaltung der niedrigeren Sintertemperatur gesintert werden.

Die Gesamtporosität der Trennschichten beträgt über 50%, die Korngrößen liegen im Bereich von 0,01 µm bis 200 µm, wobei vorzugsweise der Anteil von Körnungen ≤10 µm unter 10 Masse%, insbesondere ≤5 Masse% des Kunststoffpulvers beträgt.

In Abhängigkeit von der Korngröße weisen die Kunststoffpartikel Poren mit Durchmessern von 5 nm bis 20 µm, vorzugsweise von 10 nm bis 1 µm auf.

Die Kunststoff haben vorteilhaft K-Werte im Bereich von 50 bis 80.

Bei der Herstellung des Trennschichtmaterials können vorteilhaft durch Sintern gebildete Aggregate eingesetzt werden. Z.B. kann man verschiedene—oder auch nur ein Kunststoffpulver—sintern und die dabei gebildeten Aggregate wieder auf die gewünschte Korngröße brechen oder mahlen.

Insbesondere bei der Bildung von Formkörpern, wie Trennwänden, Diaphragmen oder Filtereinsätzen, werden die Formkörper—vorzugsweise in der Form—zumindest oberflächlich so angesintert, daß die gewünschte Stabilität erzielt wird.

Im Inneren der Formkörper kann dann eine ungesinterte Pulverphase vorliegen, sodaß im Formkörper Zonen verschiedener Struktur und dementsprechend verschiedener Eigenschaften aufeinanderfolgen.

Die Sinterung hat vor allem den Zweck der Erzielung eines mechanischen Zusammenhalts zwischen den Pulverpartikeln unter Bildung von porenförmigen Durchgängen zwischen den Partikeln; zur Beibehaltung der Mikroporosität der einzelnen zusammengesinterten Partikel darf das Sintern nicht so weit gehen, daß dabei die Mikroporen geschlossen werden. Dies kann einerseits dadurch erzielt werden, daß Kunststoffpulver, die keine Mikroporosität besitzen müssen und eine niedrigere Sintertemperatur aufweisen, als Binderphase zusammen mit mikroporösen Kunststoffpulvern höherer Sintertemperatur gesintert werden, wobei die niedrigere Sintertemperatur zur Anwendung kommt.

Anderseits kann man Kunststoffpulver sintern, die ein—üblicherweise festes—Treibmittel enthalten, das bei Sintertemperatur thermisch zerfällt und so die Poren in den zusammengesinterten Partikeln erzeugt.

Man kann auch z.B. durch Emulsionspolymerisation gebildete Primärpolymerisate sehr kleinen Durchmessers an deren Oberflächen mit einer Treibmittelschicht überziehen und dann zu Sekundäraggregaten zusammensintern, die dann auch Mikroporen aufweisen und als solche weiterverarbeitet oder eingesetzt werden.

Als Treibmittel kommen in bekannter Weise Feststoffe oder Flüssigkeiten in Frage. So können z.B. bei der Suspensionspolymerisation von PVC leichtflüchtige Lösungsmittel in die Polymerisatkörnchen eingebaut werden, die beim Aufarbeiten der Suspension die Körnchen blähen. Bei der Emulsionspolymerisation können wasserlösliche Substanzen, z.B. Hirschhornsalz oder Na-bicarbonat eingesetzt werden, die die Primärpolymerisate oberflächlich überziehen und bei der Bildung der Sekundärpolymerisaten in diese eingebaut werden. Bei einer Temperaturbehandlung zum thermischen Zerfall des Treibmittels wird die gewünschte Porosität erhalten.

Es ist üblich, zur Sinterung von Polymerpulvern Heißluft einzusetzen oder eine Wärmeübertragung durch direkte Berührung mit einem Stahlband herbeizuführen. Im vorliegenden Zusammenhang ist auch daran gedacht, Wärmestrahlung, Hochfrequenz oder Ultraschall einzusetzen.

Vorteilhaft kann bei Anwendung von Wärmestrahlung das vorzugsweise kompakte Bindematerial eines Mehrkomponentenpulvers oberflächlich mit Sensibilisierungsmitteln zur Umwandlung der Energie kurzwelliger Strahlung im Wärmeenergie behandelt werden, sodaß besonders niedrige Gesamttemperaturen in der teilweise zu sinternden Matrix erzielt werden und sichergestellt wird, daß die mikroporösen Partikel in der Matrix beim Sintern bis auf die Bindungsbereiche unverändert bleiben. Derartige Sensibilisierungsmittel sind bekannt.

Unter Verwendung der erfindungsgemäßen Materialien können Trennschichten hergestellt werden, die gegenüber den bisherigen ein wesentlich besseres Flüssigkeitsaufnahme- und -rückhaltevermögen sowie Stoffaustauschvermögen aufweisen. Aus diesen Materialien hergestellte Formkörper mit zumindest Oberflächensinterung gestatten es, diese Eigenschaften, insbesondere hohe Porosität, mit hoher Flexibilität bei entsprechender Festigkeit zu vereinen.

Dies sei am Anwendungsbeispiel der Verarbeitung zu Separatoren für Bleiakkumulatoren veranschaulicht.

Separatoren bei Bleisammlern haben einerseits die Aufgabe, die einzelnen Elektrodenplatten elektrochemisch und mechanisch voneinander zu trennen, anderseits dienen sie zur Stützung des Plattenpakets. Dazu sollten sie einerseits hohe mechanische Festigkeit, unter anderem auch Abriebfestigkeit aufweisen, anderseits ein gute Ionenleitfähigkeit bei gleichzeitig guter Isolierwirkung zeigen. Weiters sollen sie Separatoren säurebeständig sein (im geladenen Zustand der Batterie befinden sich die Separatoren in wässeriger 4,5 M Schwefelsäure), oxydationsbeständig sein (die Separatoren sind im Betrieb in direktem Kontakt mit $PbO_2$ und Sauerstoff im status nascendi) sowie thermisch beständig sein, da bei der Ladung bzw. Entladung mit hoher Stromdichte die Temperatur des Elektrolyten stark ansteigt und die Separatoren auch bei der Herstellung thermisch belastet werden.

Es hat sich gezeigt, daß die gleichzeitige Erzielung dieser angestrebten Eigenschaften bis jetzt bei Separatoren nicht erzielt werden konnte. So weisen bisher durch Sinterung von üblichem, kompaktem PVC-Pulver erhaltene Separatoren lediglich eine Porosität von maximal etwa 40% auf, sodaß die Leistungsfähigkeit so bestückter Batterien begrenzt ist. Weiterhin weisen diese bekannten Sinterseparatoren nur eine begrenzte Aufnahmefähigkeit für den Elektrolyten auf, sodaß immer ein unerwünschten, relativ großer Abstand zwischen Separatoren und Platten eingehalten werden muß. Endlich tragen diese kompakten Separatoren auf Grund ihrer Masse nicht unerheblich zum Gesamtgewicht der Batterien bei.

Es bestand somit die Aufgabe, Separatoren zu schaffen, die bei guten mechanischen Eigenschaften vor allem höhere Porosität und Speicherfähigkeit für den Elektrolyten, sowie geringeres Gewicht aufweisen, im Sinne einer höheren Energiedichte, einem möglichst abstandlosen Zusammenbau von Separatoren und Elektrodenplatten, sowie verringertem Gewicht von Volumen der Batterien bei gleichzeitig erhöhter Lebensdauer.

Diese Aufgabe wird durch den Einsatz des erfindungsgemäßen Materials gelöst.

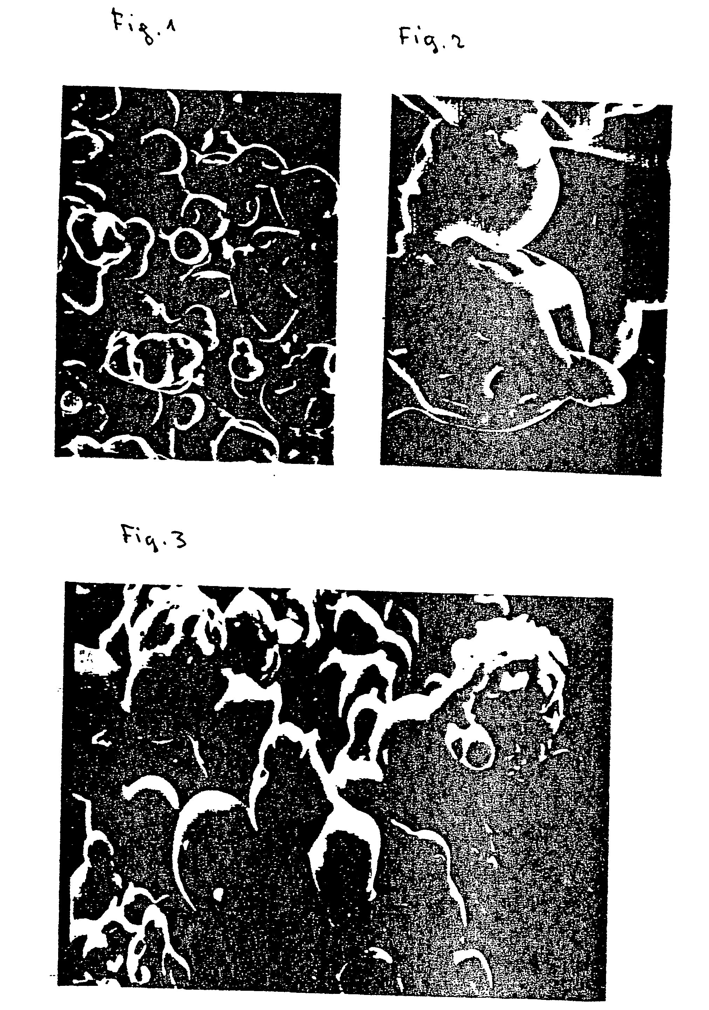

Im folgenden wird die Erfindung an Hand von Beispielen unter Bezugnahme auf die Zeichnung näher beschrieben, in denen die Figuren 1 bis 3 elektronenmikroskopische Rasteraufnahmen der Oberflächen von gesinterten Separatorenplatten zeigen.

Beispiel 1

Ein im Suspensionsverfahren hergestelltes mikroporöses PVC-Pulver auf Basis des PVC-Typs Vestalit Bi 3421 mit einer Stampfdichte nach DIN 53194 von 0,34, einer Korngrößenverteilung zwischen 1 und 60 µm (mittlere Korngröße 20 µm) und einer Weichmacheraufnahmefähigkeit (DOP) von 59% wurde auf einer Bandsintermaschine nach dem Verfahren gemäß der AT-PS 309 795 5 min lang bei 210°C gesintert.

Dabei wurde eine Platte mit einer Porosität von 59,26%, gemessen nach der Carlo Erba-Methode, erhalten. Die Oberfläche der Platte ist in Fig. 1 in 680-facher Vergrößerung, in Fig. 2 in 1640-facher Vergrößerung zu erkennen. Die Platte weist eine offene Gerüststruktur aus aneinander gesinterten Partikeln auf, wobei zumindest die größeren der Partikel selbst Sackporen und durchgehende Mikroporen zeigen.

Das Gewicht der Platte betrug etwa 2/3 des Gewichts einer aus kompaktem PVC-Pulver gesinterten Platte; die Zugfestigkeit betrug 72 kp.cm$^{-2}$ (705 N.cm$^{-2}$).

Der elektrische Widerstand liegt nur in der Größenordnung von 0,8 mΩ.dm$^{-2}$.

Beispiel 2

30 Massenteile eines im Suspensionsverfahren hergestellten, mikroporösen PVC-Pulvers auf Basis des Typs Vestalit Bi 3095 mit einem K-Wert von 71, mit einer Stampfdichte nach DIN 53194 von 0,29, einer Korngrößenverteilung zwischen 1 und 60 µm (mittlere Korngröße 20 µm) und einer Weichmacheraufnahmefähigkeit (DOP) von 87 bis 89% wurden mit 70 Massenteilen eines konpakten, im Emulsionsverfahren hergestellten PVC-Pulvers (Solvic-Sinter PVC) mit einem K-Wert von 66 und einer Stampfdichte von 0,7, gemischt und die Mischung wie in Beispiel 1 gesintert.

Dabei wurde eine Platte mit einer Porosität von 56,43%, gemessen nach der Carlo Erba-Methode, erhalten. Die Oberfläche der Platte ist in Fig. 3 in 4600-facher Vergrößerung zu erkennen. Die Platte weist eine offene Gerüststruktur aus zusammengesinterten Partikeln auf, wobei die Partikel aus dem Suspensionspolymerisat durchgehende Mikroporen zeigen.

Das Gewicht der Platte entsprach dem Gewicht der Platte nach Beispiel 1, die Zugfestigkeit betrug 100 kp.cm$^{-2}$ (908 N.cm$^{-2}$).

Der elektrische Widerstand betrug nur etwa 0,9 mΩ.dm$^{-2}$.

Die Platten nach den Beispielen 1 und 2 können zur Bildung von Separatoren für Bleiakkumulatoren eingesetzt werden, die lediglich eine Stärke von 0,4 bis 0,8 mm aufweisen müssen, um die erforderliche Wirkung zu bringen. Wieterhin können mit derartigen Separatoren die Elektrodenplatten dicht an die Separatoren gepackt werden bei entsprechender Raum- und Gewichtsersparnis.

Auch als Diaphragmamaterial in Elektrolysezellen sind derartige Platten vorteilhaft verwendbar.

Die Erfindung ist nicht auf die Beispiele beschränkt. Wie bereits erwähnt, können die erfindungsgemäßen Materialien allgemein zum Aufbau geschütteter oder geformter flüssigkeitsdurchlässiger Schichten herangezogen werden, insbesondere auch zur Anwendung beim Ionenaustausch.

## Patentansprüche

1. Verfahren zur Herstellung eines für flüssigkeitsdurchlässige Trennschichten geeigneten Kunststoff-Sintermaterials aus mindestens einem Kunststoff, ausgewählt aus der Gruppe enthaltend Polyvinylchlorid, Polyvinylchloridcopolymere, wie PVC/ABS oder PVC/Acrylsäureester, Polyvinylchloridpfropfpolymere sowie perchlorierte Polyvinylchloridabkömmlinge, Polyolefine, Polystyrol und Mischungen aus diesen Komponenten, bei dem die Kunststoffteilchen durch Sintern unter Porenausbildung zwischen den Kunststoffteilchen miteinander verbunden werden, dadurch gekennzeichnet, daß Kunststoffpulver, die keine Mikroporosität besitzen müssen und eine niedrigere Sintertemperatur aufweisen, als Binderphase zusammen mit mikroporösen Kunststoffpulvern höherer Sintertemperatur unter Einhaltung der niedrigeren Sintertemperatur gesintert werden.

2. Verfahren nach Anspruch 1, dadurch gekennzeichnet, daß eine einen Formenhohlraum zumindest teilweise ausfüllende Kunststoffpulverschicht auf Sintertemperatur erwärmt wird.

3. Verfahren nach Anspruch 1 oder 2, dadurch gekennzeichnet, daß eine kontinuierlich gebildete Kunststoffpulverschicht auf Sintertemperatur erwärmt wird.

4. Verfahren nach einem der Ansprüche 1 bis 3, dadurch gekennzeichnet, daß die Erwärmung der Schicht durch Strahlung, insbesondere im IR-Bereich, oder durch Hochfrequenz bzw. Ultraschall vorgenommen wird.

5. Verfahren nach einem der Ansprüche 1 bis 4, dadurch gekennzeichnet, daß Kunststoffpulver mit einem eingelagerten Treibmittel eingesetzt werden, dessen Treibwirkung bei erhöhter Temperatur, vorzugsweise unterhalb oder bei Sintertemperatur, eintritt.

6. Verfahren nach Anspruch 5, dadurch gekennzeichnet, daß Kunststoffpulver eingesetzt werden, die 2 bis 30 Masse-% Treibmittel, bezogen auf ihre Gesamtmasse, enthalten.

7. Verfahren nach Anspruch 1, dadurch gekennzeichnet, daß bei Anwendung von Wärmestrahlung ein oberflächlich mit Sensibilisierungsmitteln zur Umwandlung der Energie kurzwelliger Strahlung in Wärmeenergie behandeltes, vorzugsweise kompaktes Bindermaterial eines Mehrkomponentenpulvers eingesetzt wird.

## Revendications

1. Procédé de fabrication d'un matériau en matière plastique frittée convenant pour des couches de séparation perméables aux liquides, choisi dans la classe comprenant le poly(chlorure de vinyle), les copolymères de poly(chlorure de vinyle), comme le PVC/ABS ou le PVC/ester acrylique, les copolymères greffés de poly(chlorure de vinyle) et les dérivés perchlorés du poly(chlorure de vinyle), les polyoléfines, le polystyrène et les mélanges de ces composants, suivant lequel les particules de matière plastique sont soudées entre elles par frittage avec formation de pores entre les particules de matière plastique, caractérisé en ce que des poudres de matière plastique, qui ne doivent pas avoir de microporosité et ont une température de frittage peu élevée, sont frittées comme phase de liant avec des poudres de matière plastique microporeuses à température de frittage plus élevée en entretenant la température de frittage peu élevée.

2. Procédé suivant la revendication 1, caractérisé en ce qu'un mélange de poudres de matières plastiques remplissant au moins partiellement un espace de moulage est chauffé à la température de frittage.

3. Procédé suivant la revendication 1 ou 2, caractérisé en ce qu'une couche de poudres de matières plastiques formée de façon continue est chauffée à la température de frittage.

4. Procédé suivant l'une quelconque des revendications 1 à 3, caractérisé en ce que le chauffage de la couche est effectué par irradiation, en particulier dans l'IR, ou bien par haute fréquence ou ultrasons.

5. Procédé suivant l'une quelconque des revendications 1 à 4, caractérisé en ce qu'on utilise des poudres de matières plastiques avec un agent porophore incorporé, dont l'effet porophore se manifeste à une température élevée, de préférence sous ou à la température de frittage.

6. Procédé suivant la revendication 5, caractérisé en ce qu'on utilise des poudres de matières plastiques qui contiennent 2 à 30% en masse d'agent porophore, sur la base de leur masse totale.

7. Procédé suivant la revendication 1, caractérisé en ce que lors de l'application d'un rayonnement thermique, on utilise dans une poudre à plusieurs composants un liant, de préférence compact, traité en surface avec des agents sensibilisateurs pour la conversion de l'énergie de courte longueur d'onde ou énergie thermique.

## Claims

1. Process for producing a sintered plastic material suitable for liquid-permeable separating layers and composed of at least one plastic selected from the group containing polyvinyl chloride, polyvinyl chloride copolymers such as PVC/ABS or PVC/acrylate, polyvinyl chloride graft polymers and also perchlorinated polyvinyl chloride derivatives, polyolefins, polystyrene and mixtures of said components, in which the plastic particles are joined to one another by sintering, with the formation of pores between the plastic particles, characterized in that plastic powders, which do not need to have any microporosity and have a lower sintering temperature, are sintered as binder phase together with microporous plastic powders of higher sintering temperature while maintaining the lower sintering temperature.

2. Process according to Claim 1, characterized in that a plastic powder layer, which at least partially fills a mould cavity, is heated to sintering temperature.

3. Process according to Claim 1 or 2, characterized in that a continuously formed plastic powder layer is heated to sintering temperature.

4. Process according to one of Claims 1 to 3, characterized in that the layer is heated by radiation, in particular in the IR region, or by high frequency or ultrasound.

5. Process according to one of Claims 1 to 4, characterized in that plastic powders containing an included expanding agent whose expanding action sets in at elevated temperature, preferably below or at sintering temperature are used.

6. Process according to Claim 5, characterized in that plastic powders are used which contain 2 to 30% by mass of expanding agent, based on their total mass.

7. Process according to Claim 1, characterized in that, if heat radiation is used, a preferably compact binder material of a multi-component powder is used, which binder material is treated superficially with sensitizing agents for converting the energy of short-wave radiation into thermal energy.

Fig. 1

Fig. 2

Fig. 3